# EUROPEAN PATENT APPLICATION

(11) **EP 3 208 974 A1**
(43) Date of publication of application: **23.08.2017**
(21) Application number: 15857494.7
(22) Date of filing: 17.06.2015
(51) Int. Cl.: H04L 12/28, H04L 29/08

(54) **POWER LINE CARRIER COMMUNICATION TERMINAL CONTROL DEVICE, SYSTEM AND METHOD**

(30) Priority: 07.11.2014 CN 201410625747
(71) Applicant: Huawei Technologies Co. Ltd., Shenzhen, Guangdong 518129 (CN)
(72) Inventor: YIN, Bin, Shenzhen Guangdong 518129 (CN); LEI, Xin, Shenzhen Guangdong 518129 (CN); LIN, Mujia, Shenzhen Guangdong 518129 (CN); ZHOU, Yun, Shenzhen Guangdong 518129 (CN)
(74) Representative: Maiwald Patentanwalts GmbH
(86) International application number: PCT/CN2015/081670
(87) International publication number: WO 2016/070628

(57) **Abstract**

A PLC terminal control apparatus, system, and method are provided. The control system includes a PLC terminal system, a control apparatus, and an MQTT publisher. The control apparatus establishes a PLC connection to the terminal system and establishes an Ethernet connection to the publisher. The apparatus is configured to: receive a subscription request sent by the PLC terminal system, where the subscription request includes an identifier of the PLC terminal system and a topic for controlling the PLC terminal system; establish a correspondence between the topic and the identifier of the PLC terminal system in a mapping table according to the subscription request; send a subscription response message to the PLC terminal system according to the correspondence, where the subscription response message includes the topic; receive a control message published by the MQTT publisher, where the control message includes a control word and the topic, and the control word is used to control an operation performed based on the topic; and send the control message to the PLC terminal system according to the correspondence. In the present invention, a simple, smart, and flexible Internet of Things middleware platform is built, to allow an MQTT message to be carried in PLC, so as to adapt to a scenario in which communication conditions are poor or a network cable is unsuitable to be laid.

## Description

This application claims priority to Chinese Patent Application No. 201410625747.6, filed with the Chinese Patent Office on November 7, 2014 and entitled "POWER-LINE CARRIER TERMINAL CONTROL APPARATUS, SYSTEM, AND METHOD", which is incorporated herein by reference in its entirety.

### TECHNICAL FIELD

The present invention relates to the field of Internet of Things, and in particular, to a power-line carrier terminal control apparatus, system, and method.

### BACKGROUND

As an Internet of Things technology is emerging, the Internet of Things is increasingly applied to smart households, smart buildings, and smart meter reading. An underlying access network of the Internet of Things involves power-line carrier (English: Power line Carrier, PLC for short), the ZigBee protocol (English: Zigbee), the IEEE 802.11b standard-based wireless local area network protocol (English: Wireless-Fidelity, Wi-Fi for short), the Ethernet protocol, and the like. The PLC is widely favored for unique advantages it offers. During the PLC, an existing power distribution network can be directly used as a transmission line. A power-line is a network with largest coverage and a scale thereof cannot be matched by any other networks. Therefore, the PLC can easily penetrate into each family and create great space for development of the Internet of Things.

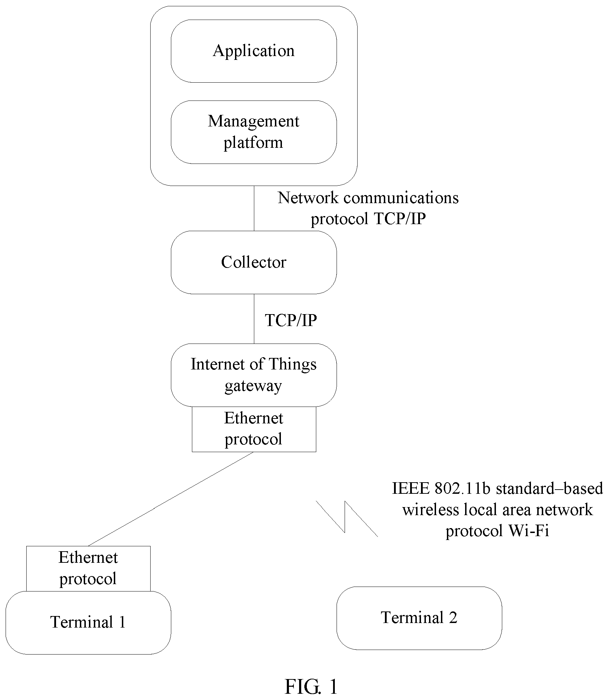

The current Internet of Things is different from a conventional data communications network that has relatively distinct levels with each level having a same protocol. During implementation of the Internet of Things, levels defined by manufacturers and protocols of the levels are not the same, and many protocols are proprietary protocols of the manufacturers. This is not helpful for device interworking between various manufacturers. As for Internet of Things products of some large manufacturers, protocols of levels are designed to be quite complex. An advantage thereof is relatively powerful functions, and a disadvantage thereof is that the protocols are excessively complex and are unsuitable for Internet of Things system development in small-and-medium systems or in a scenario in which communication quality is relatively poor. In an architectural diagram of an existing terminal control system shown in FIG. 1, the entire system is divided into four or five layers. The top layer is an application and management platform that is responsible for overall control and management. The next layer is a collector that communicates with the management platform by using the Transmission Control Protocol (English: Transmission Control Protocol, TCP for short)/Internet Protocol (English: Internet Protocol, IP for short) and that is responsible for data storage, collection, and calculation. The TCP/IP protocol is also referred to as a network communications protocol. The next layer is an Internet of Things gateway that communicates with the collector by using the TCP/IP protocol and that is responsible for finding a terminal and managing network access of a terminal. The bottom layer is a terminal, and the terminal communicates with the gateway by using an Ethernet protocol or Wi-Fi. Therefore, in the prior art, a control command needs to pass through four layers before being delivered to the terminal from an application. This control system has quite complete functions, and the functions are easy to extend. However, a relatively large quantity of hardware is needed, there is relatively great difficulty in hardware and software development, and overload is caused. Consequently, it is not helpful for control and scheduling of small-and-medium systems.

Practices of some small manufacturers and large manufacturers are two extremes. Most of the practices are directly controlling an Internet of Things terminal, that is, allowing a service to be carried in a protocol. This is not flexible enough and is harmful to function extension and adaptation of multiple types of terminals.

To sum up, a flexible terminal control technology that can adapt to an environment with poor communication conditions is needed.

### SUMMARY

The present invention provides a power-line carrier PLC terminal control apparatus, system, and method, to build a simple, smart, and flexible Internet of Things middleware platform, so as to adapt to a scenario in which communication conditions are poor or a network cable is unsuitable to be laid.

According to a first aspect, the present invention provides a power-line carrier PLC terminal control apparatus, applied to a PLC terminal control system, where the PLC terminal control system includes the apparatus, a PLC terminal system, and a message queuing telemetry transport MQTT publisher, the apparatus establishes a PLC connection to the PLC terminal system, and the apparatus establishes an Ethernet connection to the MQTT publisher; and
the apparatus is configured to: receive a subscription request sent by the PLC terminal system, where the subscription request includes an identifier of the PLC terminal system and a topic for controlling the PLC terminal system; establish a correspondence between the topic and the identifier of the PLC terminal system in a mapping table according to the subscription request, and send a subscription response message to the PLC terminal system according to the correspondence, where the subscription response message includes the topic; receive a control message published by the MQTT publisher, where the control message includes a control word and the topic, and the control word is used to control an operation performed based on the topic; and send the control message to the PLC terminal system according to the correspondence.

In a first possible implementation manner, the apparatus is further configured to receive, before receiving the subscription request sent by the PLC terminal system, a registration request sent by the PLC terminal system, where the registration request carries the identifier of the PLC terminal system; record the identifier of the PLC terminal system in the mapping table according to the registration request; and send the registration response message to the PLC terminal system; and
when establishing the correspondence between the topic and the identifier of the PLC terminal system, the apparatus is specifically configured to search the mapping table according to the identifier of the PLC terminal system in the subscription request to obtain an entry including the identifier of the PLC terminal system, and record the topic in the entry.

With reference to the first possible implementation manner of the first aspect, in a second possible implementation manner, the PLC terminal system includes a PLC terminal and a PLC front-end PFE connected to the PLC terminal, the apparatus includes an MQTT broker and a PLC data concentrator PDC connected to the MQTT broker, and the identifier of the PLC terminal system is an identifier of the PFE;
the PDC is configured to: receive the subscription request sent by the PFE, where the subscription request includes a PLC frame header and an MQTT subscription message, the identifier of the PFE is carried in the PLC frame header, and the topic is carried in the MQTT subscription message; search the mapping table according to the identifier of the PFE to obtain the entry including the identifier of the PFE, and record the topic in the entry; and delete the PLC frame header in the subscription request to obtain the MQTT subscription message, perform Ethernet encapsulation on the MQTT subscription message, and send the encapsulated MQTT subscription message to the MQTT broker; and
the MQTT broker is configured to receive the encapsulated MQTT subscription message.

With reference to the second possible implementation manner of the first aspect, in a third possible implementation manner, the MQTT broker is further configured to send the subscription response message to the PDC, where the subscription response message is an Ethernet-encapsulated MQTT response message, and the MQTT response message includes the topic; and
the PDC is further configured to receive the subscription response message, decapsulate the subscription response message to obtain the MQTT response message, and search the mapping table according to the topic to obtain the identifier of the PFE; and add the PLC frame header including the identifier of the PFE to the MQTT response message, and send, to the PFE, the MQTT response message to which the PLC frame header is added.

With reference to the second possible implementation manner of the first aspect or the third possible implementation manner of the first aspect, in a fourth possible implementation manner, the PDC is further configured to: receive the control message forwarded by the MQTT broker, where the control message is an Ethernet-encapsulated message sent by the MQTT publisher to the MQTT broker; remove Ethernet encapsulation from the control message; add the PLC frame header including the identifier of the PFE to the control message according to the correspondence between the topic and the identifier of the PFE in the mapping table, and send, to the PFE, the control message to which the PLC frame header is added.

According to a second aspect, the present invention provides a power-line carrier terminal control system, including the PLC terminal control apparatus according to the first aspect, the second possible implementation manner of the first aspect, the third possible implementation manner of the first aspect, or the fourth possible implementation manner of the first aspect, a PLC terminal system, and a message queuing telemetry transport MQTT publisher, where the PLC terminal control apparatus establishes a PLC connection to the PLC terminal system, and the apparatus establishes an Ethernet connection to the MQTT publisher.

According to a third aspect, the present invention provides a power-line carrier PLC terminal control method, applied to a PLC terminal control system, where the PLC terminal control system includes a PLC terminal control apparatus, a PLC terminal system, and a message queuing telemetry transport MQTT publisher, the PLC terminal control apparatus establishes a PLC connection to the PLC terminal system, and the PLC terminal control apparatus establishes an Ethernet connection to the MQTT publisher; and
the PLC terminal control apparatus executes the method, including:
receiving a subscription request sent by the PLC terminal system, where the subscription request includes an identifier of the PLC terminal system and a topic for controlling the PLC terminal system;
establishing a correspondence between the topic and the identifier of the PLC terminal system in a mapping table according to the subscription request;
sending a subscription response message to the PLC terminal system according to the correspondence, where the subscription response message includes the topic;
receiving a control message published by the MQTT publisher, where the control message includes a control word and the topic, and the control word is used to control an operation performed based on the topic; and
sending the control message to the PLC terminal system according to the correspondence.

In a first possible implementation manner, before the receiving a subscription request sent by the PLC terminal system, the method further includes:
receiving a registration request sent by the PLC terminal system, where the registration request carries the identifier of the PLC terminal system;
recording the identifier of the PLC terminal system in the mapping table according to the registration request; and
sending the registration response message to the PLC terminal system, where
when establishing the correspondence between the topic and the identifier of the PLC terminal system, the apparatus is specifically configured to search the mapping table according to the identifier of the PLC terminal system in the subscription request to obtain an entry including the identifier of the PLC terminal system, and record the topic in the entry.

With reference to the first possible implementation manner of the third aspect, in a second possible implementation manner, the PLC terminal system includes a PLC terminal and a PLC front-end PFE connected to the PLC terminal, the apparatus includes an MQTT broker and a PLC data concentrator PDC connected to the MQTT broker, and the identifier of the PLC terminal system is an identifier of the PFE;
the receiving a subscription request sent by the PLC terminal system includes:
receiving, by the PDC, the subscription request sent by the PFE, where the subscription request includes a PLC frame header and an MQTT subscription message, the identifier of the PFE is carried in the PLC frame header, and the topic is carried in the MQTT subscription message;
deleting, by the PDC, the PLC frame header in the subscription request to obtain the MQTT subscription message, performing Ethernet encapsulation on the MQTT subscription message, and sending the encapsulated MQTT subscription message to the MQTT broker; and
receiving, by the MQTT broker, the encapsulated MQTT subscription message; and
the establishing a correspondence between the topic and the identifier of the PLC terminal system in a mapping table according to the subscription request includes:
   searching the mapping table according to the identifier of the PFE to obtain the entry including the identifier of the PFE, and recording the topic in the entry.

With reference to the second possible implementation manner of the third aspect, in a third possible implementation manner, the sending a subscription response message to the PLC terminal system according to the correspondence includes:
sending, by the MQTT broker, the subscription response message to the PDC, where the subscription response message is an Ethernet-encapsulated MQTT response message, and the MQTT response message includes the topic;
receiving, by the PDC, the subscription response message, decapsulating the subscription response message to obtain the MQTT response message, and searching the mapping table according to the topic to obtain the identifier of the PFE; and
adding, by the PDC, the PLC frame header including the identifier of the PFE to the MQTT response message, and sending, to the PFE, the MQTT response message to which the PLC frame header is added.

With reference to the second possible implementation manner of the third aspect or the third possible implementation manner of the third aspect, in a fourth possible implementation manner, the receiving a control message published by the MQTT publisher includes:
receiving, by the MQTT broker, the control message published by the MQTT publisher, and forwarding the Ethernet-encapsulated control message to the PDC; and
receiving, by the PDC, the control message forwarded by the MQTT broker; and
the sending the control message to the PLC terminal system according to the correspondence includes:
   removing, by the PDC, Ethernet encapsulation from the control message; and
   adding, by the PDC, the PLC frame header including the identifier of the PFE to the control message according to the correspondence between the topic and the identifier of the PFE in the mapping table, and sending, to the PFE, the control message to which the PLC frame header is added.

It can be seen that according to the power-line carrier PLC terminal control system, apparatus, and method provided in the present invention, a simple, smart, and flexible Internet of Things middleware platform is built, to allow a message queuing telemetry transport message to be carried in PLC, so as to adapt to a scenario in which communication conditions are poor or a network cable is unsuitable to be laid.

### BRIEF DESCRIPTION OF DRAWINGS

To describe the technical solutions in the embodiments of the present invention or in the prior art more clearly, the following briefly describes the accompanying drawings required for describing the embodiments or the prior art.
FIG. 1 is an architectural diagram of an existing terminal control system;
FIG. 2 is an architectural diagram of a power-line carrier PLC terminal control system according to an embodiment of the present invention;
FIG. 3 is a further detailed architectural diagram of the power-line carrier terminal control system shown in FIG. 2;
FIG. 4a is a schematic structural diagram of an Ethernet-encapsulated control message sent by a message queuing telemetry transport MQTT publisher to an MQTT broker by means of an Ethernet connection;
FIG. 4b shows a structure of a control message to which a PLC frame header is added and that is sent by a PLC data concentrator to a PLC front-end by means of a PLC connection;
FIG. 5 is a schematic flowchart of a power-line carrier terminal control method according to an embodiment of the present invention; and
FIG. 6 is a further detailed schematic flowchart of the power-line carrier terminal control method shown in FIG. 5.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The present invention is applied to the field of Internet of Things, for example, to smart households, smart buildings, smart meter reading, and the like, so as to control a terminal in a smart system. In the embodiments of the present invention, a simple, smart, and flexible Internet of Things middleware platform is built, to allow an MQTT message to be carried in PLC, so as to adapt to a scenario in which communication conditions are poor or a network cable is unsuitable to be laid.

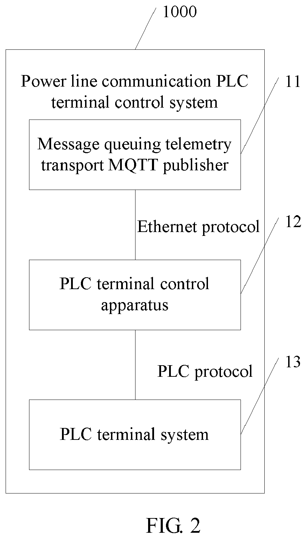

Referring to FIG. 2, FIG. 2 is an architectural diagram of a power-line carrier terminal control system according to an embodiment of the present invention. The system 1000 includes a PLC terminal system 13, a PLC terminal control apparatus 12, and an MQTT publisher 11. The PLC terminal system 13 establishes a PLC connection to the PLC terminal control apparatus 12. The PLC terminal control apparatus 12 establishes an Ethernet connection to the MQTT publisher 11. The Ethernet connection may be a TCP/IP connection or a UDP/IP connection.

In this embodiment of the present invention, a lightweight low-overhead MQTT framework is used, so as to reduce development complexity of an Internet of Things system, shorten a development cycle, and reduce bandwidth. MQTT has the following advantages: supporting a publish/subscribe model which provides one-to-many message distribution; decoupling of an application program to simplify development of the application program; a messaging transport that is agnostic to content of a payload; quite low communication overhead; and three different grades for message delivery in which a message can arrive at a destination according to a requirement, and a requirement of unstable working network transmission is suited. To sum up, an MQTT protocol is a protocol designed for communication of a large quantity of remote sensors and control devices that have a limited calculation capability and work on an unreliable low-bandwidth network. The MQTT needs an underlying network, and an Ethernet connection provides a sequence-preserving reliable connection, which is excessively complex for a simple low-cost device with small code space. The PLC terminal control apparatus 12 in this embodiment of the present invention establishes the Ethernet connection to the MQTT publisher 11, to be applicable to control on a PLC terminal system in an unreliable network environment (for example, a network environment with insufficient bandwidth).

An application program may control the MQTT publisher 11. A carrier of the application program may be an application on a handheld terminal (for example, app on an Android mobile phone) or may be a management system on a server. The MQTT publisher 11 releases a control message to the PLC terminal control apparatus 12. The PLC terminal control apparatus 12 may be an access router (English: access router, AR for short), an embedded device with any operating system (English: operating system, OS for short), or the like. The PLC terminal system 13 may be any smart device that needs to access the Internet of Things.

The application program mainly controls the PLC terminal system 13 from two parts: subscription and publishing. The PLC terminal control apparatus 12, as a bridge between the PLC terminal system 13 and the MQTT publisher 11, processes a subscription request of the PLC terminal system 13, and forwards, to the PLC terminal system 13, a control message published by the MQTT publisher 11, so as to control the PLC terminal system 13. Specifically, the PLC terminal control apparatus 12 receives the subscription request sent by the PLC terminal system 13 by means of the PLC connection. Herein, the PLC terminal system 13 may be used as a subscriber (subscriber) in an MQTT mechanism, and the PLC terminal control apparatus 12 may be used as a broker (broker) in the MQTT mechanism. In a specific embodiment, the PLC terminal control apparatus 12 may be an MQTT serving gateway. The subscription request includes an identifier of a PLC terminal system and a topic (topic) for controlling the PLC terminal system. The PLC terminal control apparatus 12 may receive a subscription request of any PLC terminal system. The application program needs to perform different controls on multiple PLC terminal systems, or control some PLC terminal systems based on one topic, and control other PLC terminal systems based on another topic. Therefore, the identifier of the PLC terminal system is carried in the subscription request, the identifier and the PLC terminal system are in a one-to-one correspondence, and the topic represents which control of the application program is received. Certainly, the topic may correspond to an identifier or identifiers of one or more PLC terminal systems, representing that topics subscribed by this group of PLC terminal systems are the same. After receiving the subscription request, the PLC terminal control apparatus 12 establishes a correspondence between the topic and the identifier of the PLC terminal system in a mapping table according to the subscription request, and responds to the subscription request according to the correspondence. That is, the PLC terminal control apparatus 12 sends a subscription response message to the PLC terminal system 13 according to the correspondence between the topic and the identifier of the PLC terminal system. The subscription response message includes the topic. The PLC terminal system 13 receives the subscription response message. According to the foregoing steps, the PLC terminal system 13 completes subscribing to the PLC terminal control apparatus 12, and the PLC terminal system 13 notifies the PLC terminal control apparatus 12 of the topic to be subscribed. After the subscription succeeds, the MQTT publisher 11 is awaited to publish a control message.

The PLC terminal control apparatus 12 is further configured to receive the control message published by the MQTT publisher 11. The control message includes a control word and a topic. The control word is used to control an operation performed based on the topic.

The PLC terminal control apparatus 12 is further configured to send the control message to the PLC terminal system 13 according to the correspondence between the topic and the identifier of the PLC terminal system.

The MQTT publisher 11 sends an Ethernet-encapsulated control message to the PLC terminal control apparatus 12 by means of the Ethernet connection. The Ethernet-encapsulated control message includes a control word and a topic. The PLC terminal control apparatus 12 decapsulates the control message, performs PLC encapsulation on the decapsulated control message according to the correspondence between the topic and the identifier of the PLC terminal system, and sends a PLC-encapsulated control message to the PLC terminal system 13 corresponding to the identifier of the PLC terminal system. The PLC terminal system 13 receives the control message sent by the PLC terminal control apparatus, decapsulates the control message, and performs a corresponding operation according to the control message. It should be noted that multiple PLC terminal systems may subscribe to the control message including the topic, and therefore, the PLC terminal control apparatus 12 may send the control message to multiple PLC terminal systems 13 according to a one-to-many correspondence between the topic and identifiers of the PLC terminal systems.

In this embodiment of the present invention, an MQTT subscribe/publish mechanism is used and applied to a PLC scenario. An underlying access terminal part uses a PLC channel, and therefore, an MQTT packet needs to be carried in PLC, so that an application program and underlying PLC hardware may be decoupled, a general middleware platform is built, and PLC control is more flexible, simpler, and smarter.

It can be seen that according to the power-line carrier PLC terminal control apparatus provided in this embodiment of the present invention, a simple, smart, and flexible Internet of Things middleware platform is built, to allow a message queuing telemetry transport message to be carried in PLC, so as to adapt to a scenario in which communication conditions are poor or a network cable is unsuitable to be laid.

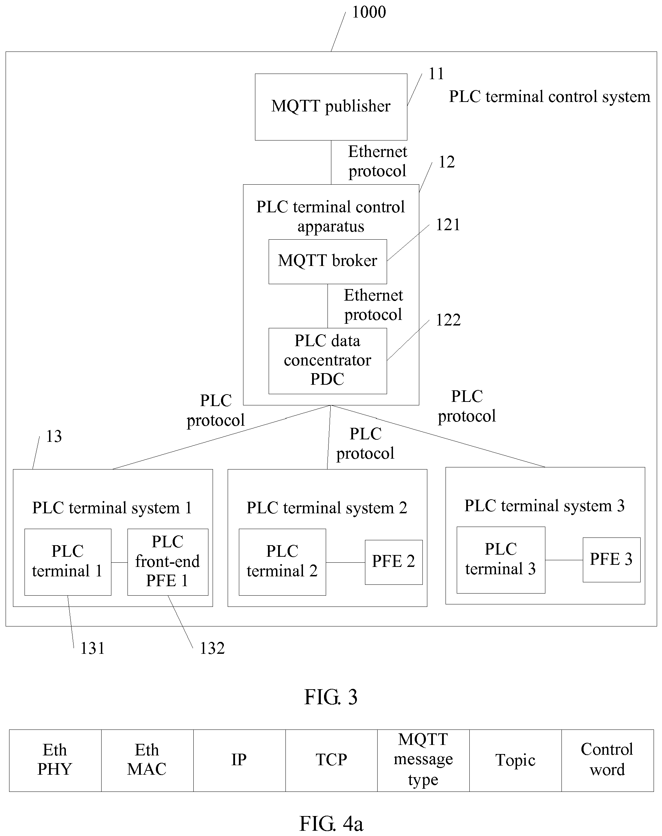

Referring to FIG. 3, FIG. 3 is a further detailed architectural diagram of the power-line carrier terminal control system shown in FIG. 2. In the control system 1000, the PLC terminal system 13 includes a PLC terminal 131 and a PLC front-end (PLC Front-End, PFE) 132 connected to the PLC terminal 131. The PLC terminal control apparatus 12 includes an MQTT broker 121 and a PLC data concentrator (PLC Data Concentrator, PDC) 122 connected to the MQTT broker 121. Herein, an identifier of a PLC terminal system is an identifier of a PFE. In this embodiment, the PLC terminal control apparatus 12 may be an MQTT serving gateway. In FIG. 3, three PLC terminals are shown, and the PLC terminals are connected to the PDC by using their respective PFEs.

Specifically, in this embodiment of the present invention, the PLC terminal control apparatus 12 includes the following two parts: an MQTT broker and a PDC.

The MQTT broker (MQTT broker) is an MQTT server. In upstream, the MQTT broker receives an MQTT packet from the PDC. In downstream, the MQTT broker receives an MQTT packet from an MQTT publisher and sends the MQTT packet to the PDC.

The PDC is a PLC data concentrator. In upstream, the PDC is responsible for receiving a packet sent from a PLC channel, removing a PLC frame header, extracting a payload (an MQTT packet), and sending the payload to the MQTT broker. In downstream, the PDC is responsible for receiving an MQTT packet sent by the MQTT broker, adding a PLC frame header, allowing MQTT to be carried in PLC, and sending the MQTT packet to a peer PFE module through the PLC channel. The PDC is a hardware daughter card that can parse a PLC signal. The PDC and a gateway master CPU may be connected by using a serial port or may be in an Ethernet connection.

The PLC terminal system 13 is an underlying access layer part. The terminal system includes two parts: One is a "terminal" part shown in FIG. 3, which may be a third-party company's switch, electricity meter, camera, sensor, or another device generally, and the other part is a PFE, that is, a PLC front-end, which is also a subscriber in the MQTT mechanism. In upstream, the PFE is responsible for receiving, from a serial port channel, data reported by a terminal, using the data as a payload of MQTT, adding a PLC frame header to an MQTT packet, and sending the MQTT packet to a PDC module at a peer end of a PLC channel. A daughter card of the PFE may be connected to the terminal (the switch, the camera, or the like) by using a serial port.

Specifically, functions of modules of the PLC terminal control apparatus are introduced in the following to describe how a PLC terminal is controlled.

Part one: Before no information is exchanged between a PFE and a PDC, the PFE needs to register with the PDC first.

The PDC is configured to receive a registration request sent by the PFE, and the registration request carries an identifier of the PFE.

The PDC is configured to record the identifier of the PFE in a mapping table according to the registration request.

The PDC is further configured to send a registration response message to the PFE.

The PFE carries its identifier PfeID and initiates the registration request to the PDC. After receiving a registration frame of the PFE, the PDC extracts the PfeID, records the identifier of the PFE in the mapping table, and sends a response packet to the PFE. After link establishment is completed, a registration process is completed.

Part two: After the registration, the PFE may send a subscription request to the PLC terminal control apparatus.

The PDC is further configured to receive the subscription request sent by the PFE. The subscription request includes a PLC frame header and an MQTT subscription message. The identifier of the PFE is carried in the PLC frame header. The topic is carried in the MQTT subscription message.

The PDC is further configured to search the mapping table according to the identifier of the PFE to obtain an entry including the identifier of the PFE, and record the topic in the entry.

The PDC is further configured to delete the PLC frame header in the subscription request to obtain the MQTT subscription message, perform Ethernet encapsulation on the MQTT subscription message, and send the encapsulated MQTT subscription message to the MQTT broker.

The MQTT broker is further configured to receive the encapsulated MQTT subscription message.

The MQTT broker is further configured to send the subscription response message to the PDC. The subscription response message is an Ethernet-encapsulated MQTT response message, and the MQTT response message includes the topic.

The PDC is further configured to receive the subscription response message, decapsulate the subscription response message to obtain the MQTT response message, and search the mapping table according to the topic to obtain the identifier of the PFE. The PDC is further configured to add the PLC frame header including the identifier of the PFE to the MQTT response message, and send, to the PFE, the MQTT response message to which the PLC frame header is added.

After the registration is completed, as a subscriber, the PFE initiates the subscription request to the PLC terminal control apparatus, and the subscription request includes the PLC frame header and the MQTT subscription message. Herein, the MQTT subscription message is an MQTT message whose msgtype is CONNECT, and the MQTT subscription message carries a topic for controlling the PLC terminal (for example, "turn on a light"). As shown in FIG. 3, a topic of a terminal 1 is "turn on a light", and topics of a terminal 2 and a terminal 3 are "turn off a light". The PFE adds the PLC frame header to the MQTT subscription message, adds the PfeID to the PLC frame header to be used as the MQTT subscription request, and sends the MQTT subscription request to the PDC. After receiving the MQTT subscription request, the PDC finds the entry according to the PfeID in the PLC frame header, deletes the PLC frame header in the subscription request to obtain the MQTT subscription message, extracts the topic in the MQTT subscription message, and stores the topic in the entry. Then the PDC performs Ethernet encapsulation on the MQTT subscription message. For example, the PDC performs TCP/IP encapsulation, that is, sending the MQTT subscription message to a TCP/IP protocol stack, and a destination address is localhost:1883. The PDC sends the encapsulated MQTT subscription message to the MQTT broker. Localhost means an IP address of a host, and 1883 is a port number agreed in an MQTT protocol.

After receiving the Ethernet-encapsulated MQTT subscription message, the MQTT broker returns, to the PFE, a subscription response message that has undergone Ethernet encapsulation in which a destination is localhost:1883. The Ethernet-encapsulated subscription response message includes the topic. Herein, the subscription response message is an MQTT message whose msgtype is CONNACK. A function of localhost:1883 is replaced in the PDC, because the IP address and the port number are used for addressing in the TCP/IP. The PDC decapsulates the Ethernet-encapsulated subscription response message, extracts the MQTT response message, extracts the topic in the MQTT response message, searches the mapping table to obtain the PfeID, and sends, to the peer PFE through the PLC channel, the MQTT response message to which the PLC frame header is added, and the PLC frame header includes the PfeID. Therefore, herein, the PDC terminates an Ethernet bearer, PLC bears an MQTT application instead, and a mapping relationship between the PfeID and the topic are used for addressing.

The PFE receives the MQTT response message sent by the peer PDC, deletes the PLC frame header, and extracts the MQTT response message. Then the subscription succeeds.

Part three: After the subscription succeeds, the MQTT publisher is awaited to publish a control message.

The PDC is further configured to receive the control message forwarded by the MQTT broker. The control message is an Ethernet-encapsulated message sent by the MQTT publisher to the MQTT broker.

The PDC is further configured to add the PLC frame header including the identifier of the PFE to the control message according to a correspondence between the topic and the identifier of the PFE in the mapping table, and send, to the PFE, the control message to which the PLC frame header is added.

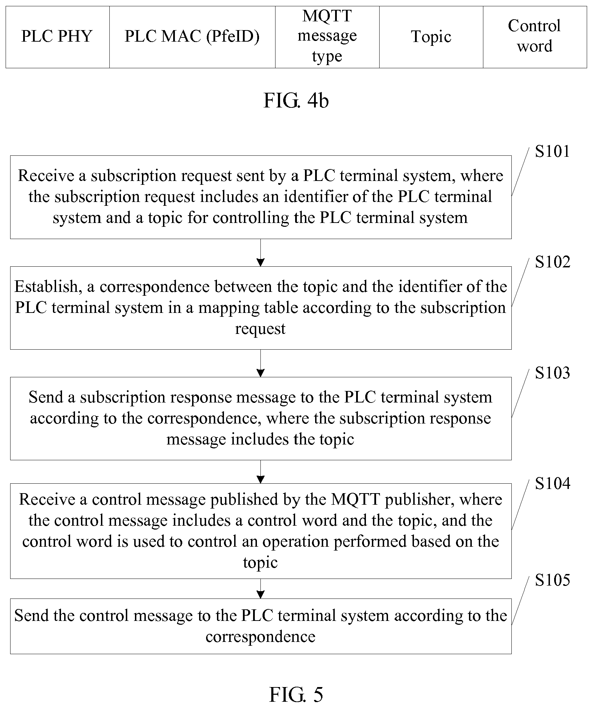

The MQTT publisher, that is, a publisher in the MQTT mechanism, agrees a set of control words CtrlWord, for example, 0x01: Enable a PLC switch, and 0x02: Disable a PLC switch (the example provided herein is merely a simplest scenario, and the CtrlWord may be extended to more cases and may have more control functions). An application program calls a publisher process, and encapsulates the CtrlWord into the Ethernet-encapsulated control message by using the CtrlWord as a payload (payload). The Ethernet-encapsulated control message further includes the topic. There is a complete Ethernet link between the publisher and the broker, and therefore, the MQTT publisher sends the Ethernet-encapsulated control message to the MQTT broker based on the Ethernet connection. A structure of the Ethernet-encapsulated control message sent by the MQTT publisher to the MQTT broker by means of the Ethernet connection is shown in FIG. 4a. Because of a sub/pub mechanism of MQTT, the publisher merely needs to know an IP address and a port number of the broker and does not need to care about the subscriber. After receiving the Ethernet-encapsulated control message, the MQTT broker returns, to the PFE, a packet in which a destination address is localhost. The Ethernet-encapsulated control message enters the PDC module. The PDC module decapsulates the Ethernet-encapsulated control message to obtain the decapsulated control message, extracts the topic in the control message, and searches the mapping table to obtain a corresponding PfeID. The PDC module adds the PLC frame header, adds the PfeID in the PLC frame header, and sends, to the PFE, the control message to which the PLC frame header is added. A structure of the control message to which the PLC frame header is added and that is sent by the PDC to the PFE by means of the PLC connection is shown in FIG. 4b. After receiving the control message to which the PLC frame header is added, the PFE decapsulates the control message to which the PLC frame header is added, extracts the CtrlWord in the control message, and sends a control instruction to the switch through a serial port to control the switch on or off. The example provided herein is a simplest control. If there are increasing control function requirements, the control instruction may be defined in a JSON message format, and the control instruction in the JSON message format is added to a message body.

In FIG. 4a, meanings of fields are as follows:
Eth PHY represents an Ethernet physical layer frame header. Eth MAC represents an Ethernet data link layer frame header. The IP field includes an IP frame header. The TCP field includes a TCP frame header. MQTT Msg type represents a type of an MQTT message. Topic represents a topic. CtrlWord represents a control word.

In FIG. 4b, meanings of fields are as follows:
PLC PHY represents a PLC physical layer frame header. PLC MAC (PfeID) represents a PLC link layer frame header that includes a PfeID. MQTT Msg type represents a type of an MQTT message. Topic represents a topic. CtrlWord represents a control word.

It can be seen from the packet structures in FIG. 4a and FIG. 4b that a packet sent by the PLC terminal control apparatus designed in this embodiment of the present invention to the PLC terminal system by means of the PLC connection is obviously more lightweight and simpler than a packet generated in a conventional case in which MQTT is carried in the TCP/IP. In addition, quite strong scalability is achieved, and there are many advantages.

It can be seen that according to the power-line carrier PLC terminal control system provided in this embodiment of the present invention, a simple, smart, and flexible Internet of Things middleware platform is built, to allow a message queuing telemetry transport message to be carried in PLC, so as to adapt to a scenario in which communication conditions are poor or a network cable is unsuitable to be laid.

Referring to FIG. 5, FIG. 5 is a schematic flowchart of a power-line carrier terminal control method according to an embodiment of the present invention. The power-line carrier terminal control method is applied to a PLC terminal control system. The PLC terminal control system includes the PLC terminal system 13, the PLC terminal control apparatus 12, and the MQTT publisher 11 that are shown in FIG. 2. The PLC terminal system establishes a PLC connection to the PLC terminal control apparatus, and the PLC terminal control apparatus establishes an Ethernet connection to the MQTT publisher. The Ethernet connection may be a TCP/IP connection or a UDP/IP connection.

In this embodiment of the present invention, a lightweight low-overhead MQTT framework is used, so as to reduce development complexity of an Internet of Things system, shorten a development cycle, and reduce bandwidth. MQTT has the following advantages: supporting a publish/subscribe model which provides one-to-many message distribution; decoupling of an application program to simplify development of the application program; a messaging transport that is agnostic to content of a payload; quite low communication overhead; and three different grades for message delivery in which a message can arrive at a destination according to a requirement, and a requirement of unstable working network transmission is suited. To sum up, an MQTT protocol is a protocol designed for communication of a large quantity of remote sensors and control devices that have a limited calculation capability and work on an unreliable low-bandwidth network. The MQTT needs an underlying network, and an Ethernet connection provides a sequence-preserving reliable connection, which is excessively complex for a simple low-cost device with small code space. The PLC terminal control apparatus 12 in this embodiment of the present invention establishes the Ethernet connection to the MQTT publisher 11, to be applicable to control on a PLC terminal system in an unreliable network environment (for example, a network environment with insufficient bandwidth).

An application program may control the MQTT publisher 11. A carrier may be a handheld terminal (for example, app on an Android mobile phone) or may be a management system on a server. The MQTT publisher 11 releases a control message to the PLC terminal control apparatus 12. The PLC terminal control apparatus 12 may be an access router (AR) or an embedded device with any operating system (OS). The PLC terminal system 13 may be any smart device that needs to access the Internet of Things.

Specifically, how a PLC terminal system is controlled by an application program is described as follows by using the following steps in the method.

Step S101. Receive a subscription request sent by the PLC terminal system, where the subscription request includes an identifier of the PLC terminal system and a topic for controlling the PLC terminal system.

Step S102. Establish a correspondence between the topic and the identifier of the PLC terminal system in a mapping table according to the subscription request.

Step S103. Send a subscription response message to the PLC terminal system according to the correspondence, where the subscription response message includes the topic.

The application program mainly controls the PLC terminal system 13 from two parts: subscription and publishing. The PLC terminal control apparatus 12, as a bridge between the PLC terminal system 13 and the MQTT publisher 11, processes a subscription request of the PLC terminal system 13, and forwards, to the PLC terminal system 13, a control message published by the MQTT publisher 11, so as to control the PLC terminal system 13. Specifically, the PLC terminal control apparatus 12 receives the subscription request sent by the PLC terminal system 13 by means of the PLC connection. Herein, the PLC terminal system 13 may be used as a subscriber (subscriber) in an MQTT mechanism, and the PLC terminal control apparatus 12 may be used as a broker (broker) in the MQTT mechanism. In a specific embodiment, the PLC terminal control apparatus 12 may be an MQTT serving gateway. The subscription request includes an identifier of a PLC terminal system and a topic (topic) for controlling the PLC terminal system. The PLC terminal control apparatus 12 may receive a subscription request of any PLC terminal system. The application program needs to perform different controls on multiple PLC terminal systems, or control some PLC terminal systems based on one topic, and control other PLC terminal systems based on another topic. Therefore, the identifier of the PLC terminal system is carried in the subscription request, the identifier and the PLC terminal system are in a one-to-one correspondence, and the topic represents which control of the application program is received. Certainly, the topic may correspond to an identifier or identifiers of one or more PLC terminal systems, representing that topics subscribed by this group of PLC terminal systems are the same. After receiving the subscription request, the PLC terminal control apparatus 12 establishes a correspondence between the topic and the identifier of the PLC terminal system in a mapping table according to the subscription request, and responds to the subscription request according to the correspondence. That is, the PLC terminal control apparatus 12 sends a subscription response message to the PLC terminal system 13 according to the correspondence between the topic and the identifier of the PLC terminal system. The subscription response message includes the topic. The PLC terminal system 13 receives the subscription response message. According to the foregoing steps, the PLC terminal system 13 completes subscribing to the PLC terminal control apparatus 12, and the PLC terminal system 13 notifies the PLC terminal control apparatus 12 of the topic to be subscribed. After the subscription succeeds, the MQTT publisher 11 is awaited to publish a control message.

Step S104. Receive a control message published by the MQTT publisher, where the control message includes a control word and the topic, and the control word is used to control an operation performed based on the topic.

Step S105. Send the control message to the PLC terminal system according to the correspondence.

The MQTT publisher 11 sends an Ethernet-encapsulated control message to the PLC terminal control apparatus 12 by means of the Ethernet connection. The Ethernet-encapsulated control message includes a control word and a topic. The PLC terminal control apparatus 12 decapsulates the control message, performs PLC encapsulation on the decapsulated control message according to the correspondence between the topic and the identifier of the PLC terminal system, and sends a PLC-encapsulated control message to the PLC terminal system 13 corresponding to the identifier of the PLC terminal system. The PLC terminal system 13 receives the control message sent by the PLC terminal control apparatus, decapsulates the control message, and performs a corresponding operation according to the control message. It should be noted that multiple PLC terminal systems may subscribe to the control message including the topic, and therefore, the PLC terminal control apparatus 12 may send the control message to multiple PLC terminal systems 13 according to a one-to-many correspondence between the topic and identifiers of the PLC terminal systems.

In this embodiment of the present invention, an MQTT subscribe/publish mechanism is used and applied to a PLC scenario. An underlying access terminal part uses a PLC channel, and therefore, an MQTT packet needs to be carried in PLC, so that an application program and underlying PLC hardware may be decoupled, a general middleware platform is built, and PLC control is more flexible, simpler, and smarter.

It can be seen that according to the power-line carrier PLC terminal control method provided in this embodiment of the present invention, a simple, smart, and flexible Internet of Things middleware platform is built, to allow a message queuing telemetry transport message to be carried in PLC, so as to adapt to a scenario in which communication conditions are poor or a network cable is unsuitable to be laid.

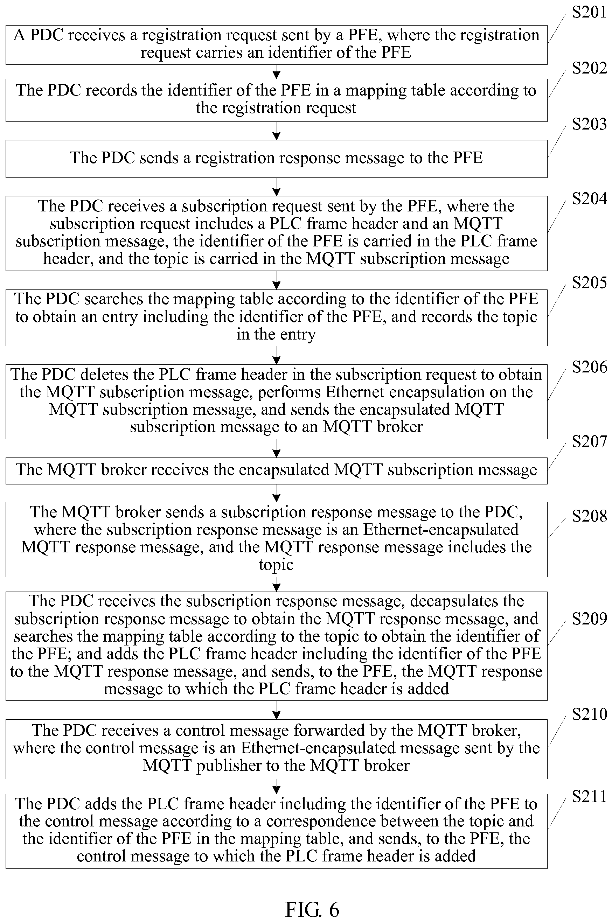

Referring to FIG. 6, FIG. 6 is a further detailed schematic flowchart of the power-line carrier terminal control method shown in FIG. 5. In the control system 1000 shown in FIG. 3, the PLC terminal system 13 includes a PLC terminal 131 and a PLC front-end (PLC Front-End, PFE) 132 connected to the PLC terminal 131. The PLC terminal control apparatus 12 includes an MQTT broker 121 and a PLC data concentrator (PLC Data Concentrator, PDC) 122 connected to the MQTT broker 121. Herein, an identifier of a PLC terminal system is an identifier of a PFE. In this embodiment, the PLC terminal control apparatus 12 may be an MQTT serving gateway. In FIG. 3, three PLC terminals are shown, and the PLC terminals are connected to the PDC by using their respective PFEs.

Specifically, in this embodiment of the present invention, the PLC terminal control apparatus 12 further includes the following two parts: an MQTT broker and a PDC.

The MQTT broker (MQTT broker) is an MQTT server. In upstream, the MQTT broker receives an MQTT packet from the PDC. In downstream, the MQTT broker receives an MQTT packet from an MQTT publisher and sends the MQTT packet to the PDC.

The PDC is a PLC data concentrator. In upstream, the PDC is responsible for receiving a packet sent from a PLC channel, removing a PLC frame header, extracting a payload (an MQTT packet), and sending the payload to the MQTT broker. In downstream, the PDC is responsible for receiving an MQTT packet sent by the MQTT broker, adding a PLC frame header, allowing MQTT to be carried in PLC, and sending the MQTT packet to a peer PFE module through the PLC channel. The PDC is a hardware daughter card that can parse a PLC signal. The PDC and a gateway master CPU may be connected by using a serial port or may be in an Ethernet connection.

The PLC terminal system 13 is an underlying access layer part. The terminal system includes two parts: One is a "terminal" part shown in FIG. 3, which may be a third-party company's switch, electricity meter, camera, sensor, or another device generally, and the other part is a PFE, that is, a PLC front-end, which is also a subscriber in the MQTT mechanism. In upstream, the PFE is responsible for receiving, from a serial port channel, data reported by a terminal, using the data as a payload of MQTT, adding a PLC frame header to an MQTT packet, and sending the MQTT packet to a PDC module at a peer end of a PLC channel. A daughter card of the PFE may be connected to the terminal (the switch, the camera, or the like) by using a serial port.

The following describes in detail how a PLC terminal system is controlled.

Part one: Before no information is exchanged between a PFE and a PDC, the PFE needs to register with the PDC first.

Step S201. The PDC receives a registration request sent by the PFE, where the registration request carries an identifier of the PFE.

Step S202. The PDC records the identifier of the PFE in a mapping table according to the registration request.

Step S203. The PDC sends a registration response message to the PFE.

The PFE carries its identifier PfeID and initiates the registration request to the PDC. After receiving a registration frame of the PFE, the PDC extracts the PfeID, records the identifier of the PFE in the mapping table, and sends a response packet to the PFE. After link establishment is completed, a registration process is completed.

Part two: After the registration, the PFE may send a subscription request to a PLC terminal control apparatus.

Step S204. The PDC receives a subscription request sent by the PFE, where the subscription request includes a PLC frame header and an MQTT subscription message, the identifier of the PFE is carried in the PLC frame header, and the topic is carried in the MQTT subscription message.

Step S205. The PDC searches the mapping table according to the identifier of the PFE to obtain an entry including the identifier of the PFE, and records the topic in the entry.

Step S206. The PDC deletes the PLC frame header in the subscription request to obtain the MQTT subscription message, performs Ethernet encapsulation on the MQTT subscription message, and sends the encapsulated MQTT subscription message to an MQTT broker.

Step S207. The MQTT broker receives the encapsulated MQTT subscription message.

Step S208. The MQTT broker sends a subscription response message to the PDC, where the subscription response message is an Ethernet-encapsulated MQTT response message, and the MQTT response message includes the topic.

Step S209. The PDC receives the subscription response message, decapsulates the subscription response message to obtain the MQTT response message, and searches the mapping table according to the topic to obtain the identifier of the PFE; and adds the PLC frame header including the identifier of the PFE to the MQTT response message, and sends, to the PFE, the MQTT response message to which the PLC frame header is added.

After the registration is completed, as a subscriber, the PFE initiates the subscription request to the PLC terminal control apparatus, and the subscription request includes the PLC frame header and the MQTT subscription message. Herein, the MQTT subscription message is an MQTT message whose msgtype is CONNECT, and the MQTT subscription message carries a topic for controlling the PLC terminal (for example, "turn on a light"). As shown in FIG. 3, a topic of a terminal 1 is "turn on a light", and topics of a terminal 2 and a terminal 3 are "turn off a light". The PFE adds the PLC frame header to the MQTT subscription message, adds the PfeID to the PLC frame header to be used as the MQTT subscription request, and sends the MQTT subscription request to the PDC. After receiving the MQTT subscription request, the PDC finds the entry according to the PfeID in the PLC frame header, deletes the PLC frame header in the subscription request to obtain the MQTT subscription message, extracts the topic in the MQTT subscription message, and stores the topic in the entry. Then the PDC performs Ethernet encapsulation on the MQTT subscription message. For example, the PDC performs TCP/IP encapsulation, that is, sending the MQTT subscription message to a TCP/IP protocol stack, and a destination address is localhost:1883. The PDC sends the encapsulated MQTT subscription message to the MQTT broker. Localhost means an IP address of a host, and 1883 is a port number agreed in an MQTT protocol.

After receiving the Ethernet-encapsulated MQTT subscription message, the MQTT broker returns, to the PFE, a subscription response message that has undergone Ethernet encapsulation in which a destination is localhost:1883. The Ethernet-encapsulated subscription response message includes the topic. Herein, the subscription response message is an MQTT message whose msgtype is CONNACK. A function of localhost:1883 is replaced in the PDC, because the IP address and the port number are used for addressing in the TCP/IP. The PDC decapsulates the Ethernet-encapsulated subscription response message, extracts the MQTT response message, extracts the topic in the MQTT response message, searches the mapping table to obtain the PfeID, and sends, to the peer PFE through the PLC channel, the MQTT response message to which the PLC frame header is added, and the PLC frame header includes the PfeID. Therefore, herein, the PDC terminates an Ethernet bearer, PLC bears an MQTT application instead, and a mapping relationship between the PfeID and the topic are used for addressing.

The PFE receives the MQTT response message sent by the peer PDC, deletes the PLC frame header, and extracts the MQTT response message. Then the subscription succeeds.

Part three: After the subscription succeeds, the MQTT publisher is awaited to publish a control message.

Step S210. The PDC receives the control message forwarded by the MQTT broker, where the control message is an Ethernet-encapsulated message sent by the MQTT publisher to the MQTT broker.

Step S211. The PDC adds the PLC frame header including the identifier of the PFE to the control message according to a correspondence between the topic and the identifier of the PFE in the mapping table, and sends, to the PFE, the control message to which the PLC frame header is added.

The MQTT publisher, that is, a publisher in the MQTT mechanism, agrees a set of control words CtrlWord, for example, 0x01: Enable a PLC switch, and 0x02: Disable a PLC switch (the example provided herein is merely a simplest scenario, and the CtrlWord may be extended to more cases and may have more control functions). An application program calls a publisher process, and encapsulates the CtrlWord into the Ethernet-encapsulated control message by using the CtrlWord as a payload (payload). The Ethernet-encapsulated control message further includes the topic. There is a complete Ethernet link between the publisher and the broker, and therefore, the MQTT publisher sends the Ethernet-encapsulated control message to the MQTT broker based on the Ethernet connection. A structure of the Ethernet-encapsulated control message sent by the MQTT publisher to the MQTT broker by means of the Ethernet connection is shown in FIG. 4a. Because of a sub/pub mechanism of MQTT, the publisher merely needs to know an IP address and a port number of the broker and does not need to care about the subscriber. After receiving the Ethernet-encapsulated control message, the MQTT broker returns, to the PFE, a packet in which a destination address is localhost. The Ethernet-encapsulated control message enters the PDC module. The PDC module decapsulates the Ethernet-encapsulated control message to obtain the decapsulated control message, extracts the topic in the control message, and searches the mapping table to obtain a corresponding PfeID. The PDC module adds the PLC frame header, adds the PfeID in the PLC frame header, and sends, to the PFE, the control message to which the PLC frame header is added. A structure of the control message to which the PLC frame header is added and that is sent by the PDC to the PFE by means of the PLC connection is shown in FIG. 4b. After receiving the control message to which the PLC frame header is added, the PFE decapsulates the control message to which the PLC frame header is added, extracts the CtrlWord in the control message, and sends a control instruction to the switch through a serial port to control the switch on or off. The example provided herein is a simplest control. If there are increasing control function requirements, the control instruction may be defined in a JSON message format, and the control instruction in the JSON message format is added to a message body.

It can be seen from the packet structures in FIG. 4a and FIG. 4b that a packet sent by the PLC terminal control apparatus designed in this embodiment of the present invention to the PLC terminal system by means of the PLC connection is obviously more lightweight and simpler than a packet generated in a conventional case in which MQTT is carried in the TCP/IP. In addition, quite strong scalability is achieved, and there are many advantages. It can be seen that according to the power-line carrier PLC terminal control system provided in this embodiment of the present invention, a simple, smart, and flexible Internet of Things middleware platform is built, to allow a message queuing telemetry transport message to be carried in PLC, so as to adapt to a scenario in which communication conditions are poor or a network cable is unsuitable to be laid.

It should be noted that, for brief description, the foregoing method embodiments are represented as a series of actions. However, a person skilled in the art should know that the present invention is not limited to the described order of the actions, because according to the present invention, some steps may be performed in other orders or simultaneously. In addition, a person skilled in the art should also know that all the embodiments described in the specification are preferred embodiments, and the related actions and modules are not necessarily mandatory to the present invention.

In the foregoing embodiments, the description of each embodiment has respective focuses. For a part that is not described in detail in an embodiment, reference may be made to related descriptions in other embodiments.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, and the communications medium includes any medium that enables a computer program to be transmitted from one place to another. The storage medium may be any available medium accessible to a computer. The following is used as an example but is not limited: The computer readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disk storage, a disk storage medium or other disk storages, or any other mediums that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (Digital Subscriber Line, DSL) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk (Disk) and disc (disc) used by the present invention includes a compact disc (CD), a laser disc, an optical disc, a digital versatile disc (DVD), a floppy disk and a Blu-ray disc. The disk generally copies data by a magnetic means, and the disc copies data optically by a laser means. The foregoing combination should also be included in the protection scope of the computer-readable medium.

In summary, what is described above is merely examples of embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A power-line carrier PLC terminal control apparatus, applied to a PLC terminal control system, wherein the PLC terminal control system comprises the apparatus, a PLC terminal system, and a message queuing telemetry transport MQTT publisher, the apparatus establishes a PLC connection to the PLC terminal system, and the apparatus establishes an Ethernet connection to the MQTT publisher; and
the apparatus is configured to: receive a subscription request sent by the PLC terminal system, wherein the subscription request comprises an identifier of the PLC terminal system and a topic for controlling the PLC terminal system; establish a correspondence between the topic and the identifier of the PLC terminal system in a mapping table according to the subscription request, and send a subscription response message to the PLC terminal system according to the correspondence, wherein the subscription response message comprises the topic; receive a control message published by the MQTT publisher, wherein the control message comprises a control word and the topic, and the control word is used to control an operation performed based on the topic; and send the control message to the PLC terminal system according to the correspondence.

2. The apparatus according to claim 1, wherein
the apparatus is further configured to receive, before receiving the subscription request sent by the PLC terminal system, a registration request sent by the PLC terminal system, wherein the registration request carries the identifier of the PLC terminal system; record the identifier of the PLC terminal system in the mapping table according to the registration request; and send the registration response message to the PLC terminal system; and
when establishing the correspondence between the topic and the identifier of the PLC terminal system, the apparatus is specifically configured to search the mapping table according to the identifier of the PLC terminal system in the subscription request to obtain an entry comprising the identifier of the PLC terminal system, and record the topic in the entry.

3. The apparatus according to claim 2, wherein the PLC terminal system comprises a PLC terminal and a PLC front-end PFE connected to the PLC terminal, the apparatus comprises an MQTT broker and a PLC data concentrator PDC connected to the MQTT broker, and the identifier of the PLC terminal system is an identifier of the PFE;
the PDC is configured to: receive the subscription request sent by the PFE, wherein the subscription request comprises a PLC frame header and an MQTT subscription message, the identifier of the PFE is carried in the PLC frame header, and the topic is carried in the MQTT subscription message; search the mapping table according to the identifier of the PFE to obtain the entry comprising the identifier of the PFE, and record the topic in the entry; and delete the PLC frame header in the subscription request to obtain the MQTT subscription message, perform Ethernet encapsulation on the MQTT subscription message, and send the encapsulated MQTT subscription message to the MQTT broker; and
the MQTT broker is configured to receive the encapsulated MQTT subscription message.

4. The apparatus according to claim 3, wherein
the MQTT broker is further configured to send the subscription response message to the PDC, wherein the subscription response message is an Ethernet-encapsulated MQTT response message, and the MQTT response message comprises the topic; and
the PDC is further configured to: receive the subscription response message, decapsulate the subscription response message to obtain the MQTT response message, and search the mapping table according to the topic to obtain the identifier of the PFE; and add the PLC frame header comprising the identifier of the PFE to the MQTT response message, and send, to the PFE, the MQTT response message to which the PLC frame header is added.

5. The apparatus according to claim 3 or 4, wherein
the PDC is further configured to: receive the control message forwarded by the MQTT broker, wherein the control message is an Ethernet-encapsulated message sent by the MQTT publisher to the MQTT broker; remove Ethernet encapsulation from the control message; add the PLC frame header comprising the identifier of the PFE to the control message according to the correspondence between the topic and the identifier of the PFE in the mapping table, and send, to the PFE, the control message to which the PLC frame header is added.

6. A power-line carrier PLC terminal control system, comprising the PLC terminal control apparatus according to any one of claims 1 to 5, a PLC terminal system, and a message queuing telemetry transport MQTT publisher, wherein the PLC terminal control apparatus establishes a PLC connection to the PLC terminal system, and the apparatus establishes an Ethernet connection to the MQTT publisher.

7. A power-line carrier PLC terminal control method, applied to a PLC terminal control system, wherein the PLC terminal control system comprises a PLC terminal control apparatus, a PLC terminal system, and a message queuing telemetry transport MQTT publisher, the PLC terminal control apparatus establishes a PLC connection to the PLC terminal system, and the PLC terminal control apparatus establishes an Ethernet connection to the MQTT publisher; and
the PLC terminal control apparatus executes the method, the method comprises:
receiving a subscription request sent by the PLC terminal system, wherein the subscription request comprises an identifier of the PLC terminal system and a topic for controlling the PLC terminal system;
establishing a correspondence between the topic and the identifier of the PLC terminal system in a mapping table according to the subscription request;
sending a subscription response message to the PLC terminal system according to the correspondence, wherein the subscription response message comprises the topic;
receiving a control message published by the MQTT publisher, wherein the control message comprises a control word and the topic, and the control word is used to control an operation performed based on the topic; and
sending the control message to the PLC terminal system according to the correspondence.

8. The method according to claim 7, before the receiving a subscription request sent by the PLC terminal system, further comprising:
receiving a registration request sent by the PLC terminal system, wherein the registration request carries the identifier of the PLC terminal system;
recording the identifier of the PLC terminal system in the mapping table according to the registration request; and
sending the registration response message to the PLC terminal system, wherein
when establishing the correspondence between the topic and the identifier of the PLC terminal system, the apparatus is specifically configured to search the mapping table according to the identifier of the PLC terminal system in the subscription request to obtain an entry comprising the identifier of the PLC terminal system, and record the topic in the entry.

9. The method according to claim 8, wherein the PLC terminal system comprises a PLC terminal and a PLC front-end PFE connected to the PLC terminal, the apparatus comprises an MQTT broker and a PLC data concentrator PDC connected to the MQTT broker, and the identifier of the PLC terminal system is an identifier of the PFE;
the receiving a subscription request sent by the PLC terminal system comprises:
receiving, by the PDC, the subscription request sent by the PFE, wherein the subscription request comprises a PLC frame header and an MQTT subscription message, the identifier of the PFE is carried in the PLC frame header, and the topic is carried in the MQTT subscription message;
deleting, by the PDC, the PLC frame header in the subscription request to obtain the MQTT subscription message, performing Ethernet encapsulation on the MQTT subscription message, and sending the encapsulated MQTT subscription message to the MQTT broker; and
receiving, by the MQTT broker, the encapsulated MQTT subscription message; and
the establishing a correspondence between the topic and the identifier of the PLC terminal system in a mapping table according to the subscription request comprises:
searching the mapping table according to the identifier of the PFE to obtain the entry comprising the identifier of the PFE, and recording the topic in the entry.

10. The method according to claim 9, wherein the sending a subscription response message to the PLC terminal system according to the correspondence comprises:
sending, by the MQTT broker, the subscription response message to the PDC, wherein the subscription response message is an Ethernet-encapsulated MQTT response message, and the MQTT response message comprises the topic;
receiving, by the PDC, the subscription response message, decapsulating the subscription response message to obtain the MQTT response message, and searching the mapping table according to the topic to obtain the identifier of the PFE; and
adding, by the PDC, the PLC frame header comprising the identifier of the PFE to the MQTT response message, and sending, to the PFE, the MQTT response message to which the PLC frame header is added.

11. The method according to claim 9 or 10, wherein the receiving a control message published by the MQTT publisher comprises:
receiving, by the MQTT broker, the control message published by the MQTT publisher, and forwarding the Ethernet-encapsulated control message to the PDC; and
receiving, by the PDC, the control message forwarded by the MQTT broker; and
the sending the control message to the PLC terminal system according to the correspondence comprises:
removing, by the PDC, Ethernet encapsulation from the control message; and
adding, by the PDC, the PLC frame header comprising the identifier of the PFE to the control message according to the correspondence between the topic and the identifier of the PFE in the mapping table, and sending, to the PFE, the control message to which the PLC frame header is added.
